# EUROPÄISCHE PATENTSCHRIFT

(11) **EP 0 773 407 B1**
(45) Veröffentlichungstag und Bekanntmachung des Hinweises auf die Patenterteilung: **11.12.2002**
(21) Anmeldenummer: 96117129.5
(22) Anmeldetag: 25.10.1996
(51) Int. Cl.: F23L 15/04, F23D 14/66, F23D 14/22, F28F 1/26, F28F 21/04

(54) **Rekuperator und Rekuperatorbrenner**
Recuperator and recuperative burner
Récupérateur et brûleur à récupération

(30) Priorität: 10.11.1995 DE 19541922
(43) Veröffentlichungstag der Anmeldung: 14.05.1997
(73) Patentinhaber: WS Wärmeprozesstechnik GmbH, D-71272 Renningen (DE)
(72) Erfinder: Wünning, Joachim, Dr.-Ing., 71229 Leonberg (DE)
(74) Vertreter: Patentanwälte Rüger, Barthelt & Abel

(56) Entgegenhaltungen:
- DE-A- 3 034 193
- DE-A- 4 011 190
- US-A- 3 829 285
- US-A- 5 326 255
- PATENT ABSTRACTS OF JAPAN vol. 095, no. 002, 31.März 1995 & JP 06 307788 A (HITACHI LTD;OTHERS: 01), 1.November 1994, -& US 5 577 555 A (HISAJIMA ET AL.) 26.November 1996

## Beschreibung

Die Erfindung betrifft einen Rekuperator für einen Rekuperatorbrenner, mit den Merkmalen des Oberbegriffes des Patentanspruches 1.

Aus der US-A-5,577,555 ist ein Wärmetauscherrohr für eine Absorptionswärmepumpe bekannt. Das Wärmetauscherrohr ist aus einem mit Noppen versehenen Blech hergestellt, indem dieses zu einem Rohr gebogen und die aneinander liegenden Kanten unter Ausbildung einer Längsnaht miteinander verschweißt worden sind. Dabei geht es darum, bei relativ niedrigen Temperaturen Flüssigkeiten wie beispielsweise eine wässrige Lösung von Lithium-Bromid in Wärmeaustausch mit anderen Medien zu bringen. Die Arbeitstemperatur liegt unterhalb der Umgebungstemperatur.

Die an dem Wärmetauscherrohr ausgebildeten Noppen weisen eine Höhe auf, die etwa das Doppelte bis Dreifache der Blechstärke des Rohrs beträgt. Die in Längsrichtung zu messende Länge der Noppen beträgt etwa das Vierfache der Wanddicke. Die Noppen sind abgerundet ausgebildet, so dass ein Winkel zwischen benachbarten Noppen nicht klar definiert ist. Am Noppenfuß grenzen die Noppen jeweils mit einem Winkel von 70° bis 80° aneinander.

Aus der DE 40 11 190 A1 ist darüber hinaus ein keramischer Rekuperator bekannt, der mit in Längsrichtung verlaufenden Falten versehen ist.

Es ist Aufgabe der Erfindung, einen keramischen Rekuperator der gattungsgemäßen Art zu schaffen, der bei hohem Wärmeübergang zwischen Verbrennungsluft und Verbrennungsgasen kostengünstig im Schlickergußverfahren herstellbar und mechanisch stabil ist.

Bei dem erfindungsgemäß ausgebildeten keramischen Rekuperator ermöglichen die hohlen Zacken als walmdachartige Erhebungen mit Firstrichtung in Längsrichtung eine gezielte Beeinflussung der sich einstellenden Gasströmungen. Nur die Außenkontur ist bei der Herstellung im Schlickergußverfahren festgelegt. Die Innenkontur ist leicht verrundet. Die angegebenen Maße stellen eine gute Beeinflussung der Gasströmung an der Innenseite sicher. Der Rekuperator weist dadurch eine Wärmeübertragungsleistung auf, die dem Wert eines aus Stahl bestehenden Rippenrekuperators nahekommt.

Vorteilhafterweise sind in Längsrichtung des Rekuperators aufeinanderfolgende Zacken in Umfangsrichtung gegeneinander versetzt. Der Versatz kann dabei sowohl eine halbe Zackenbreite als auch andere Maße betragen. Die Zacken können dabei in Umfangsrichtung einen Ring um den Rohrabschnitt bilden, auf den in Axialrichtung eine Vielzahl solcher Ringe folgt. Sie können auch auf mehr oder weniger steilen Schraubenlinien liegen, wodurch ein intensiver thermischer Kontakt zwischen Verbrennungsgasen, Verbrennungsluft und Rekuperator erreicht wird. Es ist dabei möglich, die Zacken auf einer ein- oder mehrgängigen Schraubenlinie anzuordnen.

Endseitig kann an dem Rekuperator eine einstückig mit dessen Rohrabschnitt ausgebildete Brennkammer vorgesehen sein. Dies ergibt einen einfachen und robusten Aufbau. Die Wandung der Brennkammer ist glatt. Die Brennkammer kann bei der Herstellung im Schlickergußverfahren ohne Zusatzaufwand an dem Rekuperator ausgebildet werden.

Als Keramikmaterial eignet sich insbesondere eine SiC-Keramik, die eine entsprechende Hitzebeständigkeit und Wärmeleitfähigkeit aufweist.

In der Zeichnung ist ein Ausführungsbeispiel der Erfindung dargestellt. Es zeigen:
- Fig. 1: einen Rekuperatorbrenner mit keramischem Rekuperator, in Längsschnitt und in schematisierter Darstellung,
- Fig. 2: den Rekuperatorbrenner nach Fig. 1 in einer vereinfachten Querschnittsdarstellung und
- Fig. 3: den keramischen Rekuperator nach den Fig. 1 und 2, in einer schematisierten Seitenansicht.

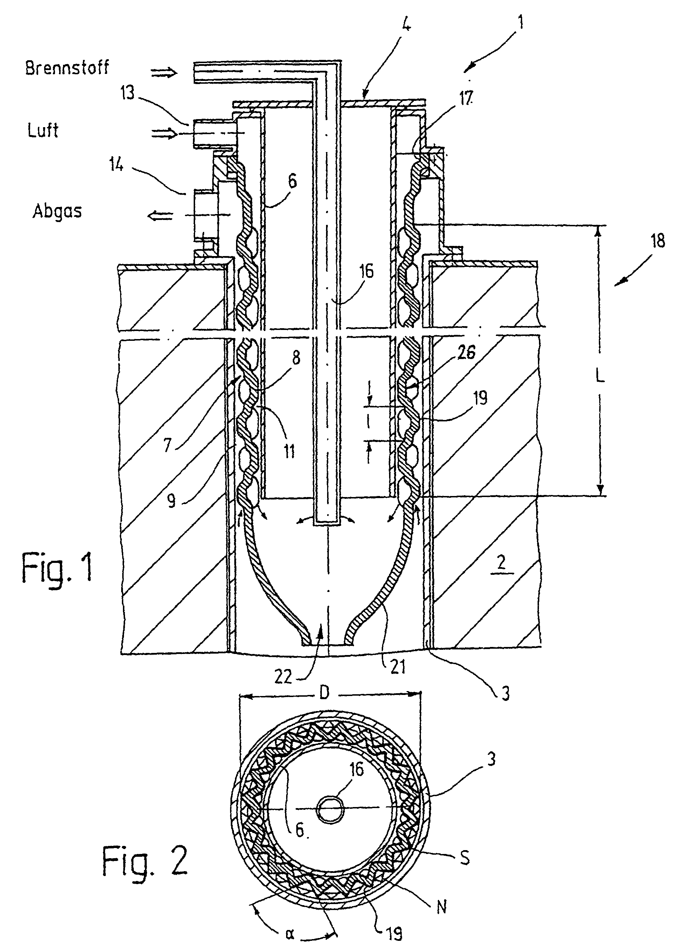

Fig. 1 zeigt einen Rekuperatorbrenner 1, der zur Beheizung eines Ofenraumes an einem Durchbruch einer Ofenwand 2 montiert ist. In dem Durchbruch sitzt ein Abgasleitrohr 3. Es kann auch als geschlossenes Abgasleitrohr zur indirekten Beheizung des Ofenraumes ausgeführt sein.

Der Rekuperatorbrenner 1 enthält einen von einem Brennerkopf 4 ausgehenden Luftleitzylinder 6, der im wesentlichen koaxial zu dem Abgasleitrohr 3 gehalten ist. Ein dadurch zwischen dem Abgasleitrohr 3 und dem Luftleitzylinder 6 definierter Ringraum 7 ist durch einen keramischen Rekuperator 8 aus SiC-Keramik in einen Außenraum 9 und einen Innenraum 11 unterteilt. Während der Innenraum 11 mit einem an dem Brennerkopf 4 vorgesehenen Anschluß 13 zur Luftzuführung verbunden ist, steht der Außenraum 9 mit einem Abgasanschluß 14 in Verbindung. Ein an dem Brennerkopf 4 vorgesehenes Brennstoffrohr 16 erstreckt sich koaxial durch den Luftleitzylinder 6.

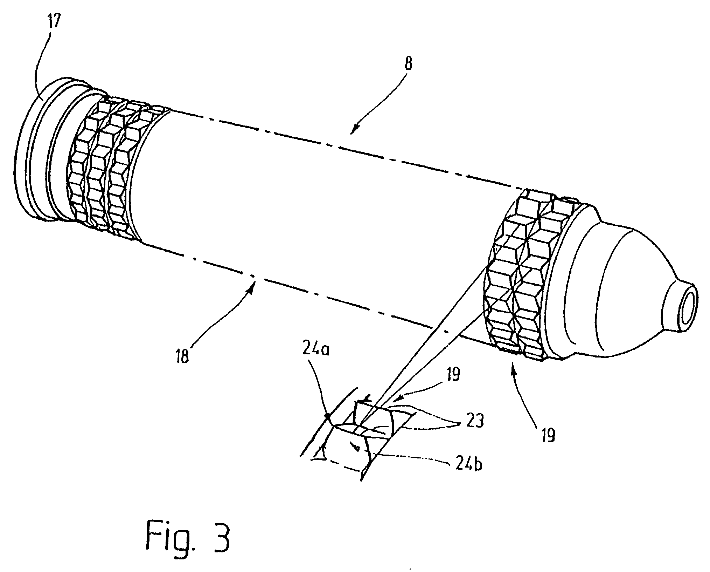

Der an einem Ende mit einem Flansch 17 an dem Brennerkopf 4 gefaßte Rekuperator 8 ist in den Fig. 2 und 3 gesondert dargestellt. Er weist im Anschluß an den Flansch 17 einen Rohrabschnitt 18 mit einer Länge L und einer Vielzahl einzelner, sich radial nach innen und nach außen erstreckender Zacken 19 auf. An den Rohrabschnitt 18, der einen im wesentlichen gleichbleibenden Durchmesser aufweist, schließt sich bei seinem anderen Ende eine Brennkammer 21 an, die stirnseitig mit einer Öffnung 22 eine Ausströmdüse definiert.

Der Rekuperator 8 und insbesondere der Rohrabschnitt 18 ist mit im wesentlichen einheitlicher Wandstärke S ausgebildet, wobei sowohl seine den Innenraum 11 begrenzende Innenfläche als auch seine den Außenraum 9 begrenzende Außenfläche jeweils gezackt sind. Die Zacken 19 sind in dichter Folge entlang des Umfanges des Rekuperators 8 ringförmig angeordnet (Fig. 3). Jeder der jeweils hohl ausgebildeten Zacken 19 weist zwei durch einen axialen First 23 miteinander verbundene Seitenflächen 24a, 24b auf, die gegen die Radiale geneigt sind. Axial ist der Zacken 19 durch geneigte dreieckige Flächen begrenzt.

Zwischen in Gruppen ringweise angeordneten Zacken 19 sind Vertiefungen 26 vorgesehen, die in ihrer Form einem Zacken 19 entsprechen, sich jedoch radial nach innen erstrecken und somit gewissermaßen ein Negativabbild eines Zackens 19 abgeben.

Die Länge 1 eines Zackens 19 (seine maximale Erstreckung in Axialrichtung) liegt in einem durch die Wanddicke S bestimmten Bereich des 4- bis 40-fachen der Wanddicke S. Die Zackenhöhe N, die der Unterschied zwischen dem geringsten Innendurchmesser des Rohrabschnittes 18 und dem größten Außendurchmesser D dieses Rohrabschnittes 18 ist, liegt in einem Bereich des 0,8- bis 4-fachen der Wanddicke S. Der Winkel α einer Seitenfläche 24a, 24b gegen die Radiale liegt zwischen 37,5° und 62,5°.

Die Zacken 19 von aufeinanderfolgenden Axialpositionen sind in Umfangsrichtung gegeneinander versetzt. Der Versatz beträgt dabei eine halbe Zackenbreite, so daß die Zacken aufeinanderfolgender Zackenringe auf Lücke stehen.

Der Rekuperator 8 wird im Schlickergußverfahren hergestellt. Hierbei wird eine fließfähige Keramikmasse in eine entsprechende Hohlform gegeben. Nach teilweisem Wasserentzug wird der Rohling ausgeformt, getrocknet und gebrannt. Die angegebenen Abmessungen des Rekuperators 8 und des Rohrabschnittes 18 stellen eine gute Herstellbarkeit sicher und ergeben eine gute Wärmeübertragungsleistung des Rekuperators 8.

Während des Betriebs des Rekuperatorbrenners 1 strömt über den Anschluß 13 und durch den Innenraum 11 Verbrennungsluft in die Brennkammer 21. Sie erwärmt sich dabei an dem heißen Rekuperator 8. Über das Brennstoffrohr 16 zugeführter Brennstoff verbrennt mit der erwärmten Verbrennungsluft in der Brennkammer 21. Erzeugte heiße oder brennende Gase treten aus der Öffnung 22 aus und erhitzen das Abgasleit- oder Strahlrohr 3. Verbrennungsabgase strömen durch den Außenraum 9 zu dem Abgasanschluß 14, wobei sie den Rekuperator 8 von außen her erhitzen.

Der mit Zacken 19 versehene Rohrabschnitt 18 dient als Wärmetauscher zur Übertragung von Wärme der Abgase auf zuströmende Verbrennungsluft. Die zum Wärmeaustausch zur Verfügung stehende Fläche ist durch die Zacken 19 und die Vertiefungen 26, die für den Innenraum 11 wiederum als Zacken wirken, gegenüber einem Rohr mit glatter Wandung deutlich erhöht. Zusätzlich wird die zuströmende Verbrennungsluft beim Entlangströmen an den Zacken 19 und Vertiefungen 26 durchmischt und insgesamt gut erwärmt. Ihre Strömung wird durch die gegeneinander versetzten Zacken 19 sowie die Vertiefungen 21 so gestört, daß es zu einem intensiven thermischen Kontakt mit dem Rohrabschnitt 18 des Rekuperators 8 kommt. Die an der Außenseite des Rekuperators 8 entlangströmenden Abgase werden ebenfalls durch die Zacken 19 und Vertiefungen 26 in intensiven thermischen Kontakt mit dem Rekuperator 8 gebracht und durchmischt. Der so erzielte Wärmeaustausch zwischen heißen Verbrennungsgasen und im Gegenstrom eingeleiteter kühler Verbrennungsluft ist sehr gut und mit einem Rekuperatorrohr aus Stahl vergleichbar.

## Patentansprüche

1. Rekuperator für einen Rekuperatorbrenner, bestehend aus einem Rohrabschnitt, dessen Wand zur Verbesserung der Wärmeübertragung von Verbrennungsabgasen auf die im Gegenstrom strömende Verbrennungsluft mit
Vorsprüngen in Form von Zacken und
mit Rücksprüngen in Form von Zacken versehen ist,
wobei die Zacken radial orientiert und in Längsrichtung des Rohrabschnittes (18) in dichter Folge vorgesehen sind,
**dadurch gekennzeichnet,**
**daß** der Rekuperator aus keramischem Material ausgebildet ist,
**daß** die Zacken (19) hohl ausgebildet sind und
**daß** die in radialer Richtung zu messende Zackenhöhe (N) in einem Bereich von dem 0,8-fachen bis zu dem 4-fachen der Wanddicke (S) des Rohrabschnittes (18) liegt,
**daß** die in Längsrichtung zu messende Zackenlänge (L) in einem Bereich von dem 4-fachen bis zu dem 40-fachen der Wanddicke (S) liegt und
**daß** der von zwei am Umfang einander benachbarter Zacken (19) eingeschlossene Winkel α in einem Bereich von 75° bis 125° liegt.

2. Rekuperator nach Anspruch 1, **dadurch gekennzeichnet, daß** in Längsrichtung des Rohrabschnittes (18) aufeinanderfolgende Zacken (19) in Umfangsrichtung gegeneinander versetzt sind.

3. Rekuperator nach Anspruch 1, **dadurch gekennzeichnet, daß** der Rohrabschnitt (18) einstückig mit einer einenends an diesem vorgesehenen Brennkammer (21) verbunden ist.

4. Rekuperator nach Anspruch 1, **dadurch gekennzeichnet, daß** der Rekuperator (8) aus einer SiC-Keramik besteht.

5. Rekuperatorbrenner (1) mit einem der Rekuperatoren gemäß der Ansprüche 1 bis 4.

## Claims

1. Recuperator for a recuperator burner comprising a pipe section, the wall of which is provided with
projections in the form of serrations and
with indentations in the form of serrations in order to improve the heat transfer from flue gases to the combustion air flowing in counterflow,
wherein the serrations are radially oriented and are arranged in close succession in the longitudinal direction of the pipe section (18),
**characterised in that**
the recuperator is made from ceramic material,
**that** the serrations (19) are of hollow construction and
**that** the serration height (N) to be measured in the radial direction lies in a range from 0.8-times to 4-times the wall thickness (S) of the pipe section (18),
**that** the serration length (L) to be measured in the longitudinal direction lies in a range from 4-times to 40-times the wall thickness (S), and
**that** the angle α enclosed by two serrations (19) adjacent to one another on the periphery lies in a range from 75° to 125°.

2. Recuperator according to Claim 1, **characterised in that** consecutive serrations (19) in the longitudinal direction of the pipe section (18) are staggered in peripheral direction.

3. Recuperator according to Claim 1, **characterised in that** the pipe section (18) is connected in one piece to a combustion chamber (21) provided at one end thereof.

4. Recuperator according to Claim 1, **characterised in that** the recuperator is made of an SiC ceramic material.

5. Recuperator burner (1) with one of the recuperators according to Claims 1 to 4.

## Revendications

1. Récupérateur pour un brûleur à récupération, comprenant un élément tubulaire dont la paroi, aux fins d'améliorer les échanges thermiques entre les gaz de combustion et l'air de combustion circulant à contre-courant, est pourvue
de parties saillantes en forme de dents triangulaires et
de parties rentrantes en forme de dents triangulaires, les dents triangulaires étant orientées radialement et étant disposées en une suite serrée dans la direction longitudinale du tronçon de tube (18),
**caractérisé**
**en ce que** le récupérateur est réalisé en un matériau céramique,
**en ce que** les dents triangulaires (19) sont creuses,
**en ce que** la hauteur de dent (N) mesurée dans la direction radiale se situe dans une plage allant de 4 fois à 40 fois l'épaisseur de paroi (S) et
**en ce que** l'angle a formé par deux dents triangulaires (19) mutuellement voisines sur la circonférence se situe dans une plage allant de 75° à 125°.

2. Récupérateur selon la revendication 1, **caractérisé en ce que** des dents triangulaires (19) consécutives dans la direction longitudinale de l'élément tubulaire (18) sont mutuellement décalées dans la direction périphérique.

3. Récupérateur selon la revendication 1, **caractérisé en ce que** des l'élément tubulaire (18) est lié d'une pièce à une chambre de combustion (21) prévue à une extrémité dudit élément tubulaire.

4. Récupérateur selon la revendication 1, **caractérisé en ce que** le récupérateur (8) est réalisé en une céramique de SiC

5. Brûleur à récupération (1) muni d'un des récupérateurs selon les revendications 1 à 4.
